Europäisches Patentamt

(19) European Patent Office   (11) Publication number:   **0 073 227**

Office européen des brevets   **B1**

(12)   **EUROPEAN PATENT SPECIFICATION**

(45) Date of publication of patent specification: **07.01.87**   (51) Int. Cl.⁴: **B 23 B 5/44**

(21) Application number: **82900822.6**

(22) Date of filing: **01.03.82**

(86) International application number:
**PCT/HU82/00007**

(87) International publication number:
**WO 82/03031 16.09.82 Gazette 82/22**

(54) **CUTTER-HOLDER FOR TURNING POLYGONAL SURFACES.**

| | |
|---|---|
| (30) Priority: **10.03.81 HU 60181** | (73) Proprietor: **NOVEX FOREIGN TRADE CO. LTD. FOR DEVELOPMENT AND COMMERCIALIZATION OF INVENTIONS 1, Marcius 15. tér H-1056 Budapest (HU)** |
| (43) Date of publication of application: **09.03.83 Bulletin 83/10** | |
| (45) Publication of the grant of the patent: **07.01.87 Bulletin 87/02** | (72) Inventor: **TAJNAFÖI, József 5, Aulich u. H-3529 Miskolc (HU)** Inventor: **GELLERT, Károly 38, Rácz A. u. H-3532 Miskolc (HU)** |
| (84) Designated Contracting States: **DE GB** | |
| (56) References cited: **DE-A-2 158 717 DE-C- 1 182 DE-C- 382 347 DE-C- 708 743 DE-C- 904 696 FR-A- 933 254 FR-A- 951 498 GB-A- 17 363 GB-A- 453 119 SU-A- 266 510 SU-A- 665 988 SU-A- 856 662** | (74) Representative: **Finck, Dieter et al Patentanwälte v. Füner, Ebbinghaus, Finck Mariahilfplatz 2 & 3 D-8000 München 90 (DE)** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a cutter-holder apparatus for the turning of polygonal surfaces comprising a cutter-holder and means for balancing the inertia forces of the cutter-holder during use.

For the turning of polygonal surfaces machines have been well known, which are producing epicycloid and hypocycloid surfaces by means of a rotary motion or by the superposition of a rotary motion and a translational motion. Any of the motions can be performed either by the tool or the work piece.

With machines on which the tool is put into motion the drawback of the versions provided with revolving tools lies in the fact that they do not represent a universal solution. Bores and tongues cannot be produced, the outer surfaces having been produced are discontinuous, and their accuracy is insufficient, because either the work piece has to be divided periodically or several adjusted turning tools are to be used.

The drawback of the known machine versions with slides, whereby the tool is put into motion, e.g. the solution having been described in the patent HU—B—91 819 lies in that the linear slides being controlled by means of cams, paths or actuated with an eccentric, are unbalanced, the power transmission via the rollers between the control elements and the slide is weak, accordingly, only a slow drive with a low efficiency becomes possible.

The lathes with a linearly actuated slide, at which the control cam is followed by the slide in a copying system, are working with a low capacity, because at the high speeds the feeler is leaving the cam behind, also the problem connected to the unbalanced state of the slides has to be confronted with. The knownn versions of the machines, where the work piece is moved (e.g. the solution having been described in the patent HU—B—156 607) are well suitable for processing smaller work pieces. With these machines the majority of the unbalanced mass is formed by the work piece. In course of changing over to another type of work piece and in course of cutting the mass of the work piece is varying, being utmost unfavourable in respect to the balance state.

With the known machines adjustment of eccentricity represents a time-consuming process.

Due to the inmperfection of the known machines enumerated above, machining of polygonal surfaces is performed rarely on automatized lathes, as e.g. capstan lathes, lathes with fly-cutters, program-controlled lathes, NC-lathes and machining lathe-centres, in addition to this, the polygon-lathes do not represent the members of the special lathe-families, e.g. they are not used with backing-off lathes. These features account for the fact, that in spite of the advantages of the application of polygonal surfaces from the technical point of view, they are not widely used.

The present invention is based on the technical task to develop a cutter-holder apparatus for turning polygonal surfaces without unbalanced masses, which can be used for machining workpieces of any weight and size, whereby the number of different surfaces to be produced is infinite and to create a cutter-holder apparatus the eccentricities of which can be adjusted or changed quickly and accurately.

This technical task is solved with a cutter-holder apparatus of the generic kind in that said means for balancing the inertia forces are constituted by a balance bridge and by at least one crankshaft supported for rotation about a stationary axis and having a first offset journal rotatably supported in bearings in the body of said cutter-holder and a second offset journal rotatably supported in bearings in the body of said balance bridge, the two journals being angularly separated about the said stationary axis by 180°, the arrangement being such that in use the balance bridge moves along a path parallel to that of the cutter-holder, but in the opposite direction.

The balance state of the cutter-holder according to the present invention is ensured by the balance bridge eccentrically moving, but in the opposite direction, in relation to the cutter-holder. The result is an essentially improved accuracy of the balancing of the inertia forces of the cutter-holder.

It is convenient that on the cutter-holder there is provided an actuating crankshaft supported for rotation about a stationary shaft and having a journal rotatably supported in bearings in the body of said cutter-holder.

It is advantageous that the actuating crankshaft is provided with a second journal on its end opposite to the journal supported in bearings in the body of said balance bridge.

With a preferred embodiment of the cutter-holder apparatus the journal of the crankshaft is supported in bearings in a crank pad sliding in a guide in the cutter-holder.

Conveniently the journal of the crankshaft is supported in bearings in a crank pad sliding in a guide in the balance bridge.

It is preferred that for preventing turn-off there is provided a double-armed lever rotatable around a central stationary axle, wherein one end of said double-armed lever is connected to the cutter-holder and the other end thereof is connected to the balance bridge.

With the said embodiment of the cutter-holder apparatus one end of the double-armed lever is connected to the cutter-holder via a first coupling rod and the other end thereof is connected to the balance bridge via a second coupling rod having the same length as the first.

Alternatively both ends of the double-armed lever can be provided with crank pads, wherein one of said crank pads slides in a guide in the balance bridge while the other crank pad slides in a guide in the cutter-holder.

Advantageously there are provided means for simultaneous adjustment of the eccentricities of the crankshafts.

Those means for simultaneous adjustment may be constituted by releasable eccentric sleeves supported in bearings in the crankshafts and provided with orienting notches, and by a special wrench engageable with the orienting notches on said sleeves.

The relative positions of the eccentric sleeves and the crankshafts can be controlled by means of a measuring element.

Also means may be provided for changing the number of revolutions of the crankshafts from a slow speed of revolution for adjusting the eccentricities of said crankshafts into the normal operational speed.

Such means for changing the speed of revolution may be constituted by a gear alternatively engageable with a gear for obtaining the operational speed or a gear engaged with a worm gear for obtaining the slow speed.

In another preferred embodiment of the cutter-holder apparatus the journal of the actuating crankshaft is constituted by an exchangeable eccentric journal connected to a centering cone, and said cone is fixed into a drive spindle of a drive unit.

The main advantages of the cutter-holder according to the invention are as follows:

On the surface of a work piece of any size and weight polygonal surfaces in an optional number and shape can be formed without the occurrence of detrimental dynamic forces or moments. Processing may be performed with a high accuracy. The forcing means are reliable bearings. In course of operation practically slides cannot be observed, accordingly considerable wear does not occur on either part of the cutter-holder, that means, that even after a long operational period accuracy remains unaltered. Changing over from the processing of one type of polygonal surface to the processing of polygonal surfaces of a different size and shape is taking place quickly and without difficulty, eccentricities may be adjusted automatically and within a short time.

By using the suitable complementary components, the cutter-holder is suitable for producing ribbed surfaces with diverse profiles, for backing-off, boring or milling.

The processing of polygonal surfaces under productive ideal cutting conditions becomes possible, as a consequence, the possibility is given to apply the polygonal surfaces— being utmost advantageous from the point of view of technics—in a wide circle.

The cutter-holder according to the invention will be described by means of some preferred embodiments by referring to the accompanying drawings, wherein

Figure 1 is schematically showing the principle of the structure and operation of the cutter-holder, provided with two crankshafts,

Figure 2 is showing the scehmatical top-view of the cutter-holder according to figure 1,

Figure 3 is showing a further embodiment of the cutter-holder according to the invention also comprising two crankshafts,

Figure 4 is a schematical top-view of the cutter-holder according to Figure 3,

Figure 5 is showing a further embodiment of the cutter-holder according to the invention,

Figure 6 an emodiment of the cutter-holder is shown, at which changing of eccentricities may be performed by the quick change of the eccentrics,

Figure 7 is showing schematically the structural solution being suitable for the simultaneous and joint adjustment of the train of eccentrics lying next to each other on the shaft,

Figure 8 is showing the principle of the adjustment of the eccentrics of the structure having been illustrated in Figure 7, in view lying normal to the shaft,

Figure 9 is showing schematically the embodiment being suitable for the simultaneous automatic adjustment of the eccentrics lying on the two camshafts.

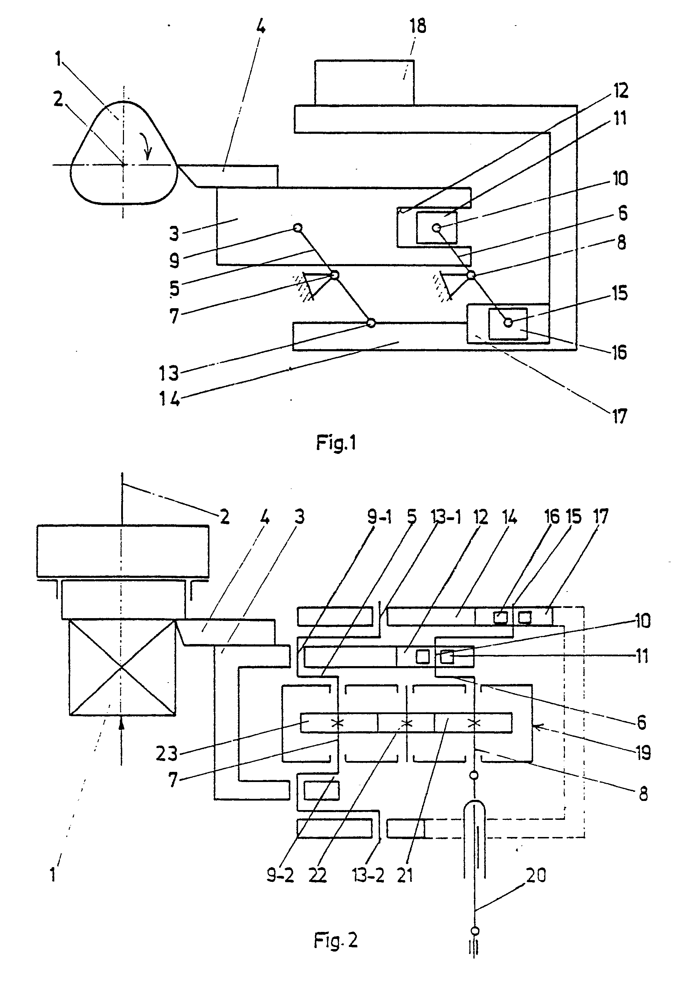

With the cutter-holder apparatus to be seen in figure 1 the work piece 1 is performing a steady rotating motion around the shaft 2. The cutter 4 chucked into the cutter-holder 3 is moved by the crankshafts 5, 6 in a translational circular motion. The crankshaft 5 is performing an unidirectional steady rotating motion with a permanent number of revolutions around the shaft 7, while the crankshaft 6 is performing the same motion around the shaft 8, while the angular velocity of the rotating motion is higher than the angular velocity of the work piece 1, and as many times higher as the polygon-number to be produced according to the prevailing requirements. The journal 9 of the crankshaft 5 is supported in bearings in the cutter-holder 3, while the journal 10 of the crankshaft 6 is supported in the crank pad 11. The crank pad 11 may slide in the link guiding 12 in the cutter-holder 3, however, this sliding movement can take place only then if the eccentricities or synchron positions of the journals 9, 10 of the crankshafts 5, 6 are different.

The crankshaft 5 rotating around the shaft 7 has a further eccentric journal 13 displaced by 180° in relation to the journal 9. The eccentric journal is supported in bearings in the balance bridge 14. At the same time, the crankshaft 6 rotating around the shaft 8 is also provided with an eccentric journal 15 displaced by 180° in relation to the journal 10. The eccentric journal 15 is supported in bearings in the crank pad 16. The crank pad 16 may slide in the link guiding 17 in the balance bridge 14. However, this sliding motion becomes possible only if the eccentricities or synchron positions of the eccentric journals 13, 15 of the crankshaft 5, 6 are different. The balancing mass 18 is also attached to the balance bridge 14.

As it is to be seen in figure 2, the shaft 7 of the crankshaft 5 is supported in bearings in the casing 19, the shaft 8 of the crankshaft 6 is also supported in the casing 19, which itself is fixed on the place of the rear cutter-holder of the lathe. The shaft 8 is driven by the telescopic cardan shaft 20, while the shaft 7 is driven from the shaft 8 via the gears 21, 22, 23. The tooth numbers of the gears 21 and 23 are identical, accordingly, the shafts 7, 8 are performing a rotating motion with identical numbers of revolutions and in the same direction.

With the embodiment according to figure 2 for actuating the cutter-holder 3 the crankshaft 5 has been provided with two eccentric journals 9-1 and 9-2, respectively, one being arranged on one side of the casing 19, the other one on the other side thereof. The cutter-holder 3 is enclosing the casing 19 from the front in a bridge-like manner. At the same time, the crankshaft 6 is provided with but one single journal 10 which is supported in bearings in the crank pad 11. By this arrangement, through the link guiding 12 the turn-off of the cutter-holder 3 may be prevented. The crankshaft 5 is provided with further two eccentric journals 13-1, 13-2, by the aid of which the balance bridge 14 is put into motion, one of the journals is arranged before the cutter-holder, the other one behind. On the top the balance bridge 14 isarranged in a bridge-like manner above the cutter-holder 3. Turning-off of the balance bridge 14 is hindered by the journal 15 of the crankshaft 6, having been supported in bearings in the crank pad 16.

In order to promote understanding, the eccentricities in figures 1, 2 and in the following ones are enlarged. The chucking part of the cutter-holder is shown in the rough only; instead of a simple chucking, cutter-holders with chucking devices enabling quick-clamping may be also used.

The advantageous feature of the cutter-holder apparatus of the figures 1 and 2 lies in, that the translational circular motion is enabled by bearings of high efficiency. The crank pad 11 does not slide normally in the link guiding 12, the possibility of sliding serves for the operational safety. The complete elimination of sliding in practice confirms the good efficiency of the solution according to the figures 1 and 2.

A further advantage lies in that the distance between the shafts 7 and 8 may be optionally selected, accordingly, an utmost advantageous proportion of the lever arms may be obtained against the moment of the cutting force.

Due to the fact that the lengths between the eccentric journals 9-1 and 9-2, i.e. the throws of the eccentric journals 13-1 and 13-2 are chosen as maximums within the dimensions of the cutter-holding device, the advantageous proportion of the lever arms against the moment of the cutting force may be observed not only in the plane lying perpendicularly to the axis of rotation, but also in the planes traversing perpendicularly the shaft 7 of the crankshaft 5. As a consequence, the cutter-holder according to the invention may be well used even with high cutting forces and high outputs.

The number of revolutions of the crankshafts should be as many times higher, than the number of revolutions of the work piece, as the number of polygons. With the up-to-date lathes the number of revolutions of the main spindle is high, this involves, that in order to be able to reach maximal cutting speeds in course of the turning process, the number of revolutions of the crankshafts is to be selected as high as possible within the dynamically possible limits. The upper limit value of this maximal number of revolutions depends mainly on the balance state of the masses performing the translational circular motion.

The balanced state is ensured by the balance bridge 14 moving in a counter-cycle in relation to the cutter-holder 3, while the accuracy of the balancing will be defined by the balancing mass 18 having been mounted onto the balance bridge and the magnitude of which is determined by the accurate weighing of the masses to be balanced.

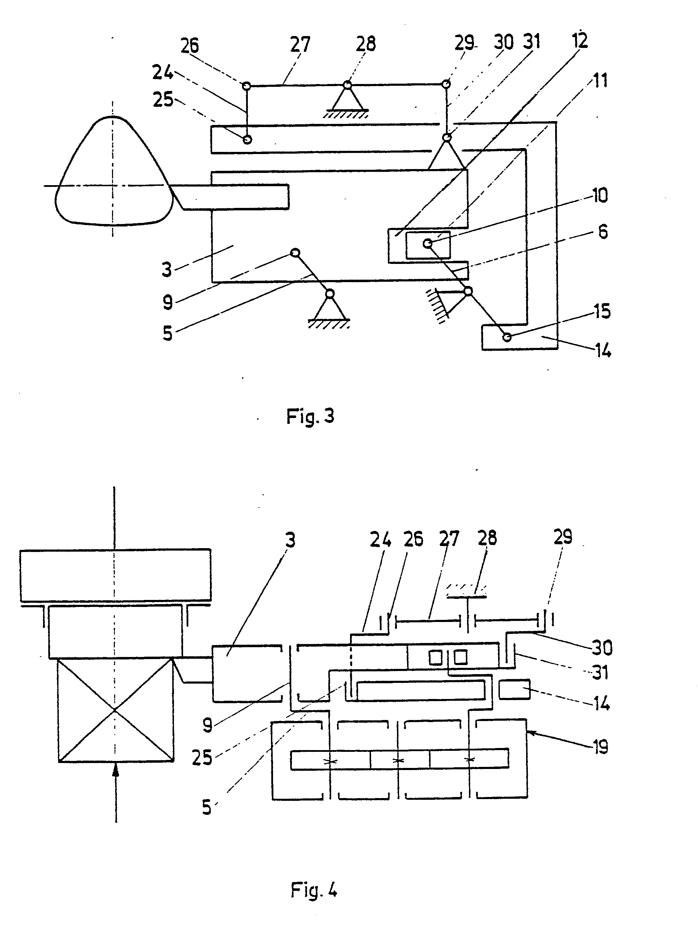

With the embodiment shown in figure 3 and 4 the crankshaft 5 has one single journal 9, having been supported in bearings in the cutter-holder 3. The crankshaft 6 has also a journal 10, having been supported in bearings in the crank pad 11, which again is led in the link guiding 12 of the cutter-holder; furthermore the crankshaft 6 is provided with an eccentric journal 15 having been displaced by 180° and of the same eccentricity, as that of the journal 10, and which is supported in bearings in the balance bridge 14. The hinge 25 of the coupling rod 24 is supported in bearings in the double-armed lever 27; the double-armed lever 27 is turning around the stationary axis 28 of rotation, while its hinge 29 is connected via the coupling rod 30 and the hinge 31 to the cutter-holder 3. The two arms of the double-armed lever 27 are of the same length, accordingly, the vertical component of motion of the cutter-holder 3 is transferred in a counter-cycle onto the balance bridge 14, whereby turning-off of the balance bridge 14 can be also prevented.

From the figure 4 it becomes obvious, that the cutter-holder 3 and the balance bridge 14 of the embodiment shown in figures 3 and 4 are arranged on one side of the casing 19, as a consequence, less eccentrics are needed and it represents a more simplified solution, than that having been illustrated in figure 1 and 2, respectively. From the point of view of the accurate bearing support of the cutter-holder it is to be considered as utmost advantageous that the camshaft 5 has only one single eccentric journal.

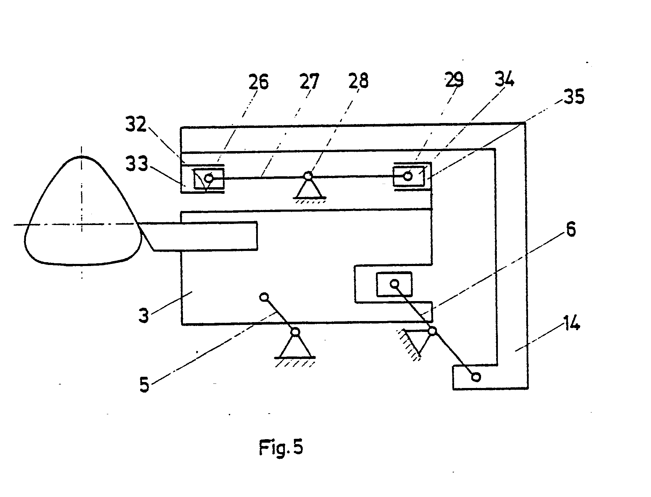

The crankshafts 5 and 6 of the solution according to figure 5, as well as the connection thereof to the cutter-holder 3 and the balance-bridge 14 are in compliance with the solution having been outlined in connection with figures 3 and 4.

The hinge 26 of the double-armed lever 27 tilting around the stationary axle of rotation 28 is supported in bearings in the crank pad 33 led in the link guiding 32 of the balance bridge 14, while the hinge 29 of the double-armed lever 27 is supported in bearings in the crank pad 34 led in the link guiding 35 of the cutter-holder 3.

The advantageous features of the solution having been described in figure 5 are the same, as those of the solution according to figures 3 and 4, with the difference, that because of the crank pads 33, 34 having been installed instead of the coupling rods 24 and 30, the heights are smaller.

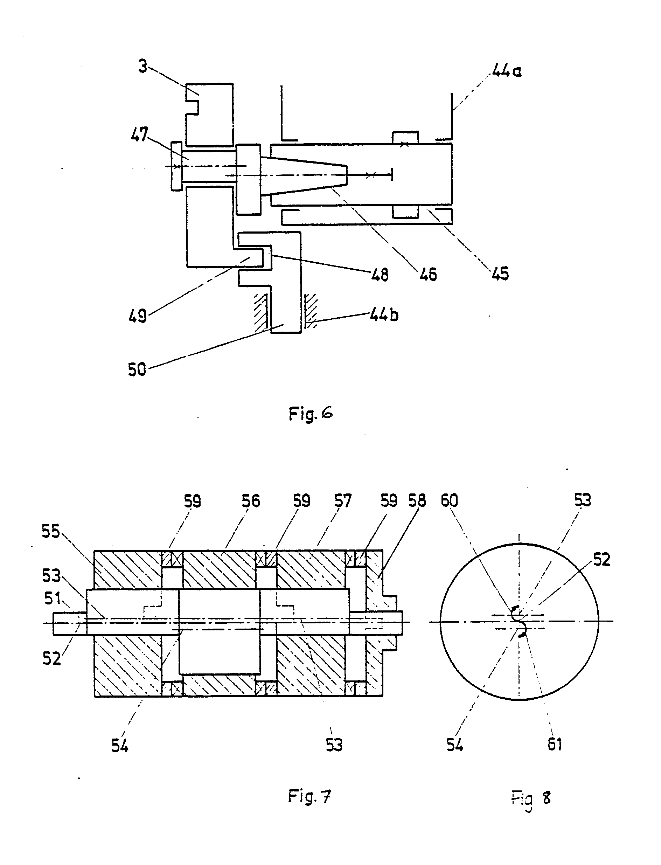

With the embodiment shown in figure 6 the preset eccentrics or the eccentrics having been set for a constant value can be exchanged together with the cutter-holders. With the embodiment shown in the figure the drive unit 44a is fixed onto a cross tool carriage. The number of revolutions of the spindle 45 is as many times higher, than the number of revolutions of the main spindle of the lathe, as the number of the polygons. Into the bore of the spindle 45 a centering cone 46 may be inserted. The eccentric journal 47 is connected to the cone 46, in relation to the centering cone 46 the journal 47 has a given or adjustable eccentricity. The journal 47 is supported in bearings in the cutter-holder 3. The rotation of the cutter-holder is prevented by the element 48. The rib 49 of the cutter-holder 3 may slide in the notch having been machined in the element 48, simultaneously the rib 50 of the element 48 is sliding resp. freely moving in the notch in the base body. The notch in the element 48 and the notch in the base body 44b are lying perpendicularly to each other. The centering cone 46 and the belonging journal 47 can be easily pulled out from the spindle 45 and they can be replaced by any other structural part, either with a similar or a different eccentricity, or carrying any other tool serving for a different purpose. In such a manner, automatic adjustment of eccentricity and the exchange of tools can be well co-ordinated. Into the centering cone of the spindle 45 not only the tools being suitable for processing polygonal surfaces, but also tools for processing with fly-cutters, for boring, milling etc. may be inserted. The driving shaft of any type of apparatus may be also connected to the centering cone.

The embodiments shown in Figures 1 to 5 are provided with more than one crankshaft, as a consequence, when adjusting and eccentricity each, more eccentrics are to be used and adjusted. The method of adjusting the eccentricity is not shown in said figures. In order to be able to shorten the time needed for the adjustment, it seems to be expedient to perform the adjustment of all the eccentrics simultaneously. In course of the adjustment of the eccentricity the requirement has to be met, in so far as the eccentricities of the eccentrics actuating the balance bridge 14 are to be adjusted to the same extent, but in a different sense, than the eccentricities of the eccentrics actuating the cutter-holder 3. Different modes of adjustment are needed, in dependence, whether the crankshaft i.e. the eccentrics—being technically equivalent with the crankshafts—are arranged on the same axis, or the crankshafts are displaced in relation to each other.

The solution having been illustrated in figure 7 is well suitable for the simultaneous adjustment of the eccentricity of the row of eccentrics arranged next to each other, when the sleeves having been formed as eccentric discs are to be adjusted in the opposite sense. The adjusted confining eccentricities are enclosing an angle of 180° in every position.

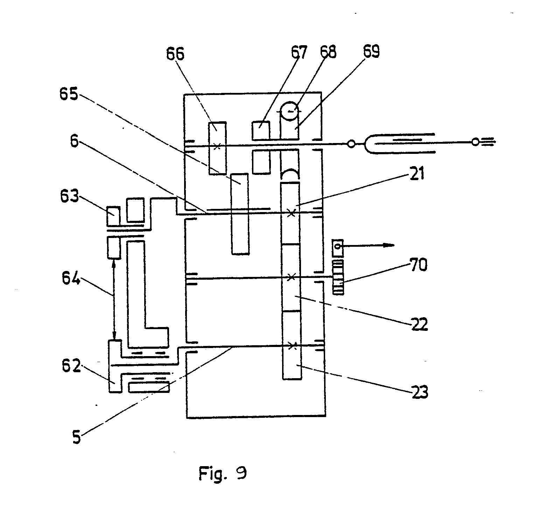

The principle of the adjustment is shown in figure 8, in view lying normal to the axis. The simplified scheme is showing only the positions of the midlines, i.e. the path having been covered in course of the adjustment.

On the internal shaft 51 the surfaces are showing three different eccentricities. The eccentricities of the two outer journals equal to zero, their shaft is formed by the central shaft 52. As advancing inwards, the two journals are provided with the shaft 53, while the shaft 54 belongs to the central journal. On the eccentric journals the sleeves 55, 56, 57 and 58 are arranged, serving for the adjustment of eccentricity. Said sleeves are interconnected by the rings 59, which are formed in a similar manner, as the floating disc of the Oldham-type coupling. The rings are transferring the rotating motion from one sleeve to the other.

In figure 7 the sleeves 56, 57 are adjusted to the zero-eccentricity, in this case the central shaft 52 is forming the centreline of the outer surfaces of the sleeves. In this position the outer surfaces can be preparedand ground in a simple and easy manner. When the sleeves are rotated in clockwise direction, the shafts of the sleeves 55, 57 are advancing from the center (figure 8) around the shaft 53 along the path 60, at the same time the axis of the outer surface of the sleeve 56 is changing its position along the path 61. When the angular displacements are equal, the eccentricities of the neighbouring sleeves will be also equal after the single adjustments, however, with an opposite sense.

The eccentricity of the sleeve 58 is always equal to zero. The solution having been illustrated in figure 10 enables the simultaneous adjustment of the eccentricities of the crankshafts running parallel, however, displaced, with each other. In the figure the balance bridge is not illustrated.

With the embodiments shown in figure 9, the adjustment of the two shafts and the row of eccentrics thereon is performed in such a manner, that the eccentric sleeves 62, 63 are stopped in a given position, e.g. so that either they are coupled by means of a special wrench 64, or automatically oriented and fixed in course of the slow rotation, thereafter the connection with the camshafts is released, while the camshafts are rotated in a low adjusting circular motion until reaching the required position; the sleeves are fixed to the camshaft, i.e. in case of a discrete divider they are oriented and fixed.

After having stopped all the eccentric sleeves in a given position, the entire task of adjustment is simplified to a simple task of division.

At the embodiment to be seen in figure 9 the gear 65 may be driven from the gear 66 or the gear 67. When the gear 65 is engaged with the gear 66 an operational quick-drive suitable for processing will be obtained, while in case of an engagement with the gear 67, driving is taking place from the worm gears 68, 69. The gears 21, 22, 23 may be rotated in both engagements via the gears 67—65.

In course of the slow adjusting motion initially the crankshafts 5, 6 are co-rotating with the sleeves 62, 63, whereas in a given position the sleeves are fixed against rotation, e.g. by means of the special wrench 64 engaging with the orienting notches on the sleeves 62, 63. Subsequently the coupling between the crankshafts and the sleeves is to be released and in course of the further adjusting motion the crankshafts 5 and 6 are rotated in relation to the stationary sleeves 62, 63. The desired relative position of the crankshafts 5 and 6 and the co-ordinated sleeves 62, 63 may be well controlled e.g. by using the measuring element 70.

Hereupon the sleeves 62, 63 are fixed on the crankshafts 5 and 6, respectively, the special wrench 64 or any other retaining means are released from the orienting notches of the sleeves 62, 63 and after the engagement of the gear 65 with the gear 66 the operational state is restored.

By using suitable accessories, the cutter-holder according to the invention may be rendered suitable for the processing of recurring surface-elements having been machined onto other bodies of rotation. Such surfaces are e.g. shafts and discs provided with ribs of different profiles, relieved surfaces and surfaces having been processed by milling and boring.

**Claims**

1. Cutter-holder apparatus for turning polygonal surfaces, comprising a cutter-holder (3) and means for balancing the inertia forces of the cutter-holder (3) during use, characterised in that said means for balancing the inertia forces are constituted by a balance bridge (14) and by at least one crankshaft (6) supported for rotation about a stationary axis and having a first offset journal (10) rotatably supported in bearings in the body of said cutter-holder (3) and a second offset journal (15) rotatably supported in bearings in the body of said balance bridge (14), the two journals being angularly separated about the said stationary axis by 180°, the arrangement being such that in use the balance bridge moves along a path parallel to that of the cutter-holder, but in the opposite direction.

2. The cutter-holder apparatus of claim 1, characterized in that on the cutter-holder (3) there is provided an actuating crankshaft (5) supported for rotation about a stationary shaft (7) and having a journal (9) rotatably supported in bearings in the body of said cutter-holder (3).

3. The cutter-holder apparatus of claim 2, characterized in that the actuating crankshaft (5) is provided with a second journal (13) on its end opposite to the journal (9) supported in bearings in the body of said balance bridge (14).

4. The cutter-holder apparatus of one of the claims 1 to 3, characterized in that the journal (10) of the crankshaft (6) is supported in bearings in a crank pad (11) sliding in a guide (12) in the cutter-holder (3).

5. The cutter-holder apparatus of one of the claims 1 to 4, characterized in that the journal (15) of the crankshaft (6) is supported in bearings in a crank pad (16) sliding in a guide (17) in the balance bridge (14).

6. The cutter-holder apparatus of one of the claims 1 to 5, characterized in that for preventing turn-off there is provided a double-armed lever (27) rotatable around a central stationary axle (28), wherein one end of said double-armed lever (27) is connected to the cutter-holder (3) and the other end thereof is connected to the balance bridge (14).

7. The cutter-holder apparatus of claim 6, characterized in that one end of the double-armed lever (27) is connected to the cutter-holder (3) via a first coupling rod (30) and the other end thereof is connected to the balance bridge (4) via a second coupling rod (24) having the same length as the first.

8. The cutter-holder apparatus of claim 6, characterized in that both ends of the double-armed lever (27) are provided with crank pads (33, 34), and one of said crank pads (33) slides in a guide (32) of the balance bridge (14) while the other crank pad (34) slides in a guide (35) in the cutter-holder (3).

9. The cutter-holder apparatus of one of the claims 1 to 8, characterized in that there are provided means (62 to 64) for simultaneous adjustment of the eccentricities of the crankshafts (5, 6).

10. The cutter-holder apparatus of claim 9, characterized in that the means for simultaneous adjustment are constituted by releasable eccentric sleeves (62, 63) supported in bearings in the crankshafts (5, 6) and provided with orienting notches, and by a special wrench (64) engageable with the orienting notches on said sleeves (62, 63).

11. The cutter-holder apparatus of claim 9 or 10, characterized in that the relative positions of the eccentric sleeves (62, 63) and the crankshafts (5, 6) are controlled by means of a measuring element (70).

12. The cutter-holder apparatus of claim 10 or 11, characterized in that there are provided means for changing the speed of revolution of the crankshafts (5, 6) from slow for adjusting the eccentricities of said crankshafts (5, 6) into the normal operational speed.

13. The cutter-holder apparatus of claim 12, characterized in that said means for changing the speed of revolution are constituted by a gear (65) alternatively engageable with a gear (66) for obtaining the operational speed or a gear (67) engaged with worm gears (68, 69) for obtaining the slow speed.

14. The cutter-holder apparatus of one of the claims 1 to 13, characterized in that the journal (9) of the actuating crankshaft (5) is constituted by an exchangeable eccentric journal (47) connected to a centering cone (46), and said cone (46) is fixed into a drive spindle (45) of a drive unit (44a).

**Patentansprüche**

1. Schneidwerkzeughaltevorrichtung zum Drehen von polygonalen Oberflächen mit einem Schneidwerkzeughalter (3) und Einrichtungen zum Ausgleich der Trägheitskräfte des Schneidwerkzeughalters (3) während des Gebrauchs, dadurch gekennzeichnet, daß die Einrichtungen zum Ausgleich der Trägheitskräfte von einer Ausgleichsbrücke (14) und von wenigstens einer Kurbelwelle (6) gebildet werden, die für eine Drehung um eine stationäre Achse gelagert und einen ersten abgesetzten Zapfen (10), der drehbar in Lagern im Körper des Schneidwerkzeughalters (3) gehalten ist, und einen zweiten abgesetzten Zapfen (15) aufweist, der drehbar in Lagern im Körper der Ausgleichbrücke (14) gehalten ist, wobei die beiden Zapfen winkelmäßig die stationäre Achse um 180° getrennt sind und die Anordnung so getroffen ist, daß im Einsatz die Ausgleichsbrücke sich längs einer Bahn bewegt, die parallel zu der des Schneidwerkzeughalters, jedoch in entgegengesetzter Richtung, ist.

2. Schneidwerkzeughaltevorrichtung nach Anspruch 1, dadurch gekennzeichnet, daß an dem Schneidwerkzeughalter (3) eine Betätigungskurbelwelle (5) vorgesehen ist, die für die Drehung um einen stationären Schaft (7) gelagert ist und einen Zapfen (9) aufweist, der drehbar in Lagern in dem Körper des Schneidwerkzeughalters (3) gehalten ist.

3. Schneidwerkzeughaltevorrichtung nach Anspruch 2, dadurch gekennzeichnet, daß die Betätigungskurbelwelle (5) mit einem zweiten Zapfen (13) an ihrem dem Zapfen (9) gegenüberliegenden Ende versehen ist, der in Lagern in dem Körper der Ausgleichsbrücke (14) gehalten ist.

4. Schneidwerkzeughaltevorrichtung nach einem der Ansprüche 1 bis 3, dadurch gekennzeichnet, daß der Zapfen (10) der Kurbelwelle (6) in Lagern in einem Kurbelgleitstück (11) gehalten ist, das in einer Führung (12) in dem Schneidwerkzeughalter (3) gleitend verschiebbar ist.

5. Schneidwerkzeughaltevorrichtung nach einem der Ansprüche 1 bis 4, dadurch gekennzeichnet, daß der Zapfen (15) der Kurbelwelle (6) in Lagern in einem Kurbelgleitstück (16) gehalten ist, das in einer Führung (17) in der Ausgleichsbrücke (14) gleitend verschiebbar ist.

6. Schneidwerkzeughaltevorrichtung nach einem der Ansprüche 1 bis 5, dadurch gekennzeichnet, daß zum Verhindern des Abdrehens ein doppelarmiger Hebel (27) vorgesehen ist, der um eine zentrale stationäre Achse (28) drehbar ist, wobei ein Ende des doppelarmigen Hebels (27) mit dem Schneidwerkzeughalter (3) und das andere Ende mit der Ausgleichsbrücke (14) verbunden ist.

7. Schneidwerkzeughaltevorrichtung nach Anspruch 6, dadurch gekennzeichnet, daß ein Ende des doppelarmigen Hebels (27) mit dem Schneidwerkzeughalter (3) über eine erste Kupplungsstange (30) und das andere Ende mit der Ausgleichsbrücke (4) über eine zweite Kupplungsstange (24) verbunden ist, die die gleiche Länge wie die erste hat.

8. Schneidwerkzeughaltevorrichtung nach Anspruch 6, dadurch gekennzeichnet, daß die beiden Enden des doppelarmigen Hebels (27) mit Kurbelgleitstücken (33, 34) versehen sind, von denen das eine Kurbelgleitstück (33) in einer Führung (32) der Ausgleichsbrücke (14) und das andere Kurbelgleitstück (34) in einer Führung (35) im Schneidwerkzeughalter (3) gleitend verschiebbar ist.

9. Schneidwerkzeughaltevorrichtung nach einem der Ansprüche 1 bis 8, dadurch gekennzeichnet, daß Einrichtungen (62 bis 64) zum gleichzeitigen Einstellen der Exzentrizitäten der Kurbelwellen (5, 6) vorgesehen sind.

10. Schneidwerkzeughaltevorrichtung nach Anspruch 9, dadurch gekennzeichnet, daß die Einrichtungen zum gleichzeitigen Einstellen von lösbaren Exzenterhülsen (62, 63), die in Lagern in den Kurbelwellen (5, 6) gehalten und mit Ausrichteinkerbungen versehen sind, und von einem Spezialschlüssel (64) gebildet werden, der mit den Ausrichteinkerbungen an den Hülsen (62, 63) in Eingriff bringbar ist.

11. Schneidwerkzeughaltevorrichtung nach Anspruch 9 oder 10, dadurch gekennzeichnet, daß die Relativstellungen der Exzenterhülsen (62, 63) und der Kurbelwellen (5, 6) mit Hilfe eines Meßelements (70 eingestellt werden.

12. Schneidwerkzeughaltevorrichtung nach Anspruch 10 oder 11, dadurch gekennzeichnet, daß Einrichtungen zum Ändern der Drehgeschwindigkeit der Kurbelwellen (5, 6) von langsam zum Einstellen der Exzentrizitäten der Kurbelwellen (5, 6) auf die normale Betriebsgeschwindigkeit vorgesehen sind.

13. Schneidwerkzeughaltevorrichtung nach Anspruch 12, dadurch gekennzeichnet, daß die Einrichtungen zum Ändern der Drehgeschwindigkeit von einem Zahnrad (65), das alternativ mit einem Zahnrad (66) zur Erzielung der Betriebsgeschwindigkeit in Eingriff bringbar ist, oder von einem Zahnrad (67) gebildet werden, das mit Schnekkenrädern (68, 69) zur Erzielung der langsamen Geschwindkeit in Eingriff bringbar ist.

14. Schneidwerkzeughaltevorrichtung nach einem der Ansprüche 1 bis 13, dadurch gekennzeichnet, daß der Zapfen (9) der Betätigungskurbelwelle (5) von einem austauschbaren Exzenterzapfen (47) gebildet wird, der mit einem Zentrierkonus (46) verbunden ist, welcher in einer Antriebsspindel (45) einer Antriebseinheit (44a) festgelegt ist.

**Revendications**

1. Appareil porte-outil pour façonner au tour des surfaces polygonales, comprenant un porte-outil (3) et des moyens pour équilibrer les forces d'inertie du porte-outil (3) en cours d'utilisation, caractérisé en ce que lesdits moyens permettant d'équilibrer les forces d'inertie sont constitués par un pont d'équilibrage (14) et par au moins un vilebrequin (6) porté à rotation autour d'un axe fixe et présentant un premier tourillon désaxé (10) porté à rotation dans des paliers situés dans le corps dudit porte-outil (3) et un second tourillon désaxé (15) porté à rotation dans des paliers situés dans le corps dudit pont d'équilibrage (14), les deux tourillons étant séparés angulairement de 180° autour dudit axe fixe, l'agencement étant tel qu'en cours d'utilisation le pont d'équilibrage se déplace le long d'un trajet parallèle à celui du porte-outil, mais dans la direction opposée.

2. Appareil porte-outil de la revendication 1, caractérisé en ce qu'il est prévu sur le porte-outil (3) vilebrequin de manoeuvre (5) porté à rotation autour d'un axe fixe (7) présentant un tourillon (9) porté à rotation dans des paliers situés dans le corps dudit porte-outil (3).

3. Appareil porte-outil de la revendication 2, caractérisé en ce que le vilebrequin de manoeuvre (5) est muni, sur son extrémité opposée au tourillon (9), d'un second tourillon (13) porté dans des paliers situés dans le corps dudit pont d'équilibrage (14).

4. Appareil porte-outil de l'une des revendications 1 à 3, caractérisé en ce que le tourillon (10) vilebrequin (6) est porté dans des paliers situés dans un patin-coulisse (11) coulissant dans un guide (12) situé dans le porte-outil (3).

5. Appareil porte-outil de l'une des revendications 1 à 4, caractérisé en ce que le tourillon (15) du vilebrequin (6) est porté dans des paliers situés dans un patin-coulisse (16) coulissant dans un guide (17) situé dans le pont d'équilibrage (14).

6. Appareil porte-outil de l'une des revendications 1 à 5, caractérisé en ce que, pour empêcher déviation, il est prévu un levier à double bras (27) pouvant tourner autour d'un axe fixe central (28), une extrémité dudit levier à double bras (27) étant relié au porte-outil (3) et sont autre extrémité étant reliée au point d'équilibrage (14).

7. Appareil porte-outil de la revendication 6, caractérisé en ce qu'une extrémité de levier à double bras (27) est reliée au porte-outil (3) par l'intermédiaire d'une première bielle (30) et son autre extrémité est reliée au pont d'équilibrage (4) par l'intermédiaire d'une seconde bielle (24) présentant la même longueur que la première.

8. Appareil porte-outil de la revendication 6, caractérisé en ce que deux extrémités du levier à double bras (27) sont munies de patins-coulisses (33, 34), et l'un des patins-coulisses (33) coulisse dans un guide (32) du point d'équilibrage (14) tandis que l'autre patin-coulisse (34) coulisse dans un guide (35) situé dans le porte-outil (3).

9. Appareil porte-outil de l'une des revendications 1 à 8, caractérisé en ce qu'il est prévu des moyens (62 à 64) permettant un réglage simultané des excentricités des vilebrequins (5, 6).

10. Appareil porte-outil de la revendication 9, caractérisé en ce que les moyens de réglage simultané sont constitués par des manchons excentriques détachables (62, 63) portés par des paliers sur les vilebrequins (5, 6) et munis d'encoches d'orientation, et par une clé à visser (64) pouvant venir en prise avec les encoches d'orientation situées sur lesdits manchons (62, 63).

11. Appareil porte-outil de la revendication 9 ou 10, caractérisé en ce que les positions relatives des manchons excentriques (62, 63) et des vilebrequins (5, 6) sont contrôlées au moyen d'un élément de mesure (70).

12. Appareil porte-outil de la revendication 10 ou 11, caractérisé en ce qu'il est prévu des moyens pour faire varier la vitesse de rotation des vilebrequins (5, 6) à partir d'une faible vitesse en vue de régler les excentricités desdits vilebrequins (5, 6) jusqu'à la vitesse de fonctionnement normal.

13. Appareil porte-outil de la revendication 12, caractérisé en ce que lesdits moyens de variation de la vitesse de rotation sont constitués par une roue dentée (65) pouvant venir alternativement en prise avec une roue dentée (66)afin d'obtenir le fonctionnement en vitesse de régime ou avec une roue dentée (67) en prise avec des vis sans fin (68, 69) en vue d'obtenir la faible vitesse.

14. Appareil porte-outil de l'une des revendications 1 à 13, caractérisé en ce que le tourillon (9) du vilebrequin de manoeuvre (5) est constitué par un tourillon excentrique interchangeable (47) relié à un cône de centrage (46), et ledit cône (46) est fixé dans une broche de commande (45) d'un ensemble d'entraînement (44a).

Fig.1

Fig. 2

Fig. 3

Fig. 4

Fig. 5

Fig. 6

Fig. 7

Fig 8

4

Fig. 9